# EUROPEAN PATENT SPECIFICATION

(11) **EP 2 401 441 B1**
(45) Date of publication and mention of the grant of the patent: **19.03.2014**
(21) Application number: 10720335.8
(22) Date of filing: 17.02.2010
(51) Int. Cl.: E03C 1/122

(54) **AIR ADMITTANCE VALVE**
BELÜFTUNGSVENTIL
SOUPAPE D'ADMISSION D'AIR

(30) Priority: 25.02.2009 EP 09447002
(43) Date of publication of application: 04.01.2012
(73) Proprietor: Studor S.A., 1150 Luxembourg, Grand Duchy of Luxemburg (LU)
(72) Inventor: ERICSON, Kurt Sture Birger, B-2970 Schilde (BE); LOW, Han Sin, Sungei Buloh Selangor 47000 (MY)
(74) Representative: Overath, Philippe
(86) International application number: PCT/BE2010/000010
(87) International publication number: WO 2010/096885

(56) References cited:
- EP-A1- 0 100 657
- EP-A1- 0 409 506
- EP-A2- 0 401 989
- EP-A2- 1 059 391
- GB-A- 2 231 391

## Description

### Field of the invention

This invention is relating to air admittance valves as defined in the preamble of claim 1, the valves being connected to a sanitary waste pipe system in order to protect the water traps in the system and to prevent communication between the air contained in waste pipes or sewers systems with surrounding atmosphere, said valve opens automatically to admit atmospheric air into the pipe system upon a sudden pressure drop or under-pressure peak within said pipe system.

A building drainage and vent system involves, in normal operating conditions, the establishment of an induced air flow within the vertical stacks of the system due to the unsteady water downfall generated by any sanitary appliance discharge. In order to protect the habitable space against contaminated odours, each appliance is normally protected by a water trap seal. Variation due to water downfall within the drainage system, generates occasional variations in air pressure (positive and/or negative) that are often capable of disturbing these water trap seals either by siphonage due to a sudden under-pressure in the system or as a result of back pressures following air path closures by water surcharge.

### Description of the prior art

Air admittance valves have been introduced to avoid said inconveniences and also offers the possibility of avoiding the necessity to vent the waste pipe system outside the roof of the building as said valves only open in response to sub-atmospheric pressure conditions in the waste pipe system.

Said valves are designed to assure a maximum possible air inlet flow from the air inlet of the valve to the waste pipe system while passing through the temporary opened valve membrane.

Distinction is to be made between two major categories of air admittatice valves; the first category comprising an annular closing member resting on two co-axial circular seats and the second category comprising a spherical or circular closing member resting on a corresponding peripheral seat.

One of the first automatic air admittance valves is disclosed in document BE 831.833.

A more recent patent document US 4.232.706, in the name of the applicant, discloses an automatic valve device in which a vertical tube, constituting the body of the valve, comprises at its upper end a constriction in the form of a Venturi which co-operates with a cover so as to form a peripheral air inlet provided with an annular valve member situated at the exterior of the constriction and which can be tilted when a negative pressure occurs in the pipes while permitting the fresh air to penetrate into the vertical waste water pipe and which, when the pressure is equilibrated or when there is overpressure, occupies a closed position in which the escape of contaminated air is prevented. Said valve comprises an annular peripheral opening which distributes the air inlet, in case of lifting of the annular valve member, towards the vertical tube in connection with the waste pipe.

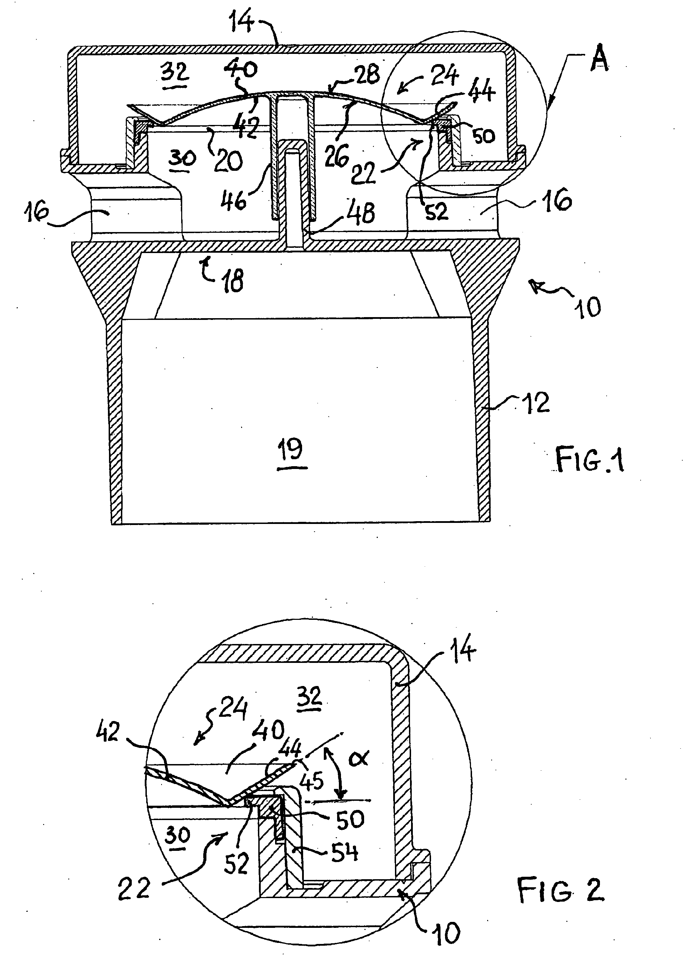

The air admittance valve (AAV) according to document GB 2 231 391 discloses a peripheral annular air inlet passage (52) leading to the inlet ports (6) (see p.8, 1. 21-24 and Fig. 1). The valve seats (18, 20) for sealing-off the inlet ports (6) are positioned at two separate coaxial areas (10, 12) which are vertically and horizontally spaced apart (p.7, 1. 5-8). The closure means (8) has two separate sealing surfaces, the top lip (22) and the bottom wall (24) who engage the valve seals (18, 20) repectively (p.7, 1. 15-18). The central part of the bottom wall (24) of the closure means (8) is provided with a spoke arrangement having openings or apertures (36) (see Fig. 2).

The air admittance valve according to document EP 0 401 989 discloses a one way AVV including one sealing means (8 or disc 16) being such that it seals off the valve at two separate coaxial areas (18, 20) to prevent air coming from the peripheral air inlet ports (6) to pass into the centre of the sealing means and around the periphery of the sealing means. These two separate seals (18, 20) are radially spaced apart and positioned inwardly and outwardly of the inlet ports (6). The sealing means (8, 16) are provided with a flat horizontal or inclined flange (25) which has to match with the two radially spaced apart seals (18, 20) and three spokes (27) which define three apertures (28).

In valves of this kind, the circular or annular valve member is generally resting on two concentric valve seats having each a circular sealing surface. In case of deformation or distortion of the valve member, problems could occur with the necessary airtight closure of said valve member or membrane with at least one of the two sealing surfaces.

According to AAV's of the second category, the document EP 0 100 657 discloses an air admittance valve having a cylindrical portion (1d) so as to bound a central chamber (le) which opens upwardly to a circular opening (1f) and which opens laterally of a hollow body (1) to the exterior (1g). The circular opening (1f) can be closed off by means of a valve plunger (3) which overlies the opening (1f). To provide an air-tight seal between the valve member (3) and the circular opening (1f), the plunger (3) is provided with a flexible and resilient diaphragm (5) which is retained onto the plunger by means of a resilient star locking washer (6).

Document EP 0 409 506 discloses a valve device for admitting air to a pipe, comprising a body adapted to be mounted on the pipe, a chamber in the upper part of the body provided with at least one first passageway to the inner space of the pipe, a central circular closing member and a second passage way within the body for communication between the surrounding air and the chamber when the closing member is lifted. Said closing member being generally guided by guiding means such as a central rod. The sealing between the movable closing member and the seal has been realized either with an O-ring provided on the seal surface or a rubber disc provided on the closing member.

Document EP 1 650 363 disclosed an air admittance valve having basically the same structure as the above mentioned device. The seal element comprises an elastomer seal membrane maintained by an upper and a lower membrane support. The seal membrane rests on a sealing lip of the air inlet wall when the valve is in sealing position.

The manufacture of the closing member or membrane in known devices is generally complicated and expensive because it is made out of several elements of different composition, i.e. rigid and/or flexible material. Another major drawback of the existing air admittance valves is the accuracy of the sealing capacity between the closing member or membrane and the sealing surface or valve seat. Indeed, said sealing surface is mostly rigid or includes a fixed sealing ring (O-ring). Small variations in the flatness of the closing member and/or of the sealing surface, due to thermal or material deformations, may occur causing possible leakage's and release of contaminated air from the sewage system towards the surrounding atmosphere.

### Summary of the invention

It is an object of the invention to provide an improved air admittance valve which is very simple and easy to manufacture while providing improved sealing capacities and sealing reliability.

The above objects are achieved in accordance with the characteristics of the present invention which are defined in the annexed set of claims.

The inverted bowl shaped inner part of the closing member provides an increased surface in contact with the atmospheric air pressure.

More details, advantages and features of the invention will appear from the following description of an embodiment of the valve according to the invention and in which reference is made to drawings in which :

### Description of the drawings

Figure 1 : is cross sectional view of a valve housing provided with sealing means according to the invention, showing the passageways towards the surrounding atmosphere;
Figure 2 is an enlarged view of detail A in figure 1 with the closing member in closed or sealed position;
Figure 3 : is a cross sectional view of the same valve housing but taken in a plane perpendicular to one in figure 1, showing the passageways towards the inner space of the sewage system;
Figure 4 : is an enlarged view of detail B in figure 3 with the closing member in open or lifted position;
Figure 5 : is a partial sectional view identical to figure 3, showing some alternative constructional features;
Figure 6 : is a sectional view along the line C-C in the figure 5 showing an example of the valve guiding means;
Figure 7: is a detailed cross section of the poppet valve according to the invention.

### Description of the preferred embodiments

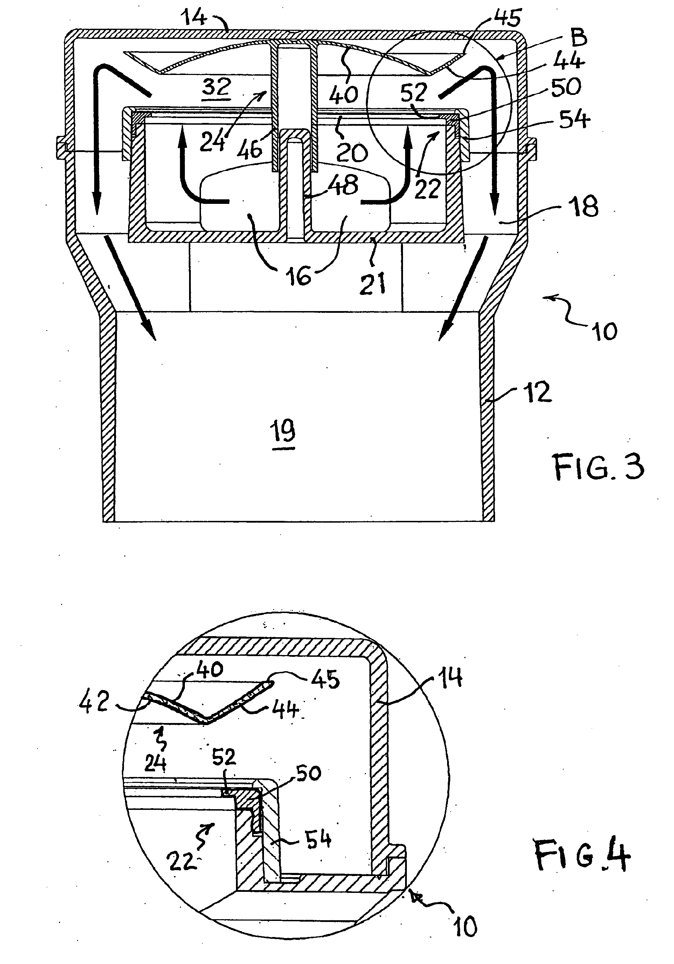

As shown in figures 1 and 3, the valve comprises a classical air admittance valve housing 10 having a lower part comprising a vertical tubular member 12, with inner space 19, adapted to be connected to a vertical stack of a sanitary waste pipe (not shown) being part of a sewage system.

The upper part of the housing 10 is closed off with a cap or cover 14. Between the cover 14 and the tubular member 12, the housing is commonly provided with, on the one hand, passageways 16 towards the surrounding atmosphere and on the other hand, passageways 18 (Fig. 3) towards the inner space 19 of the tubular member 12 and consequently to the sewage system.

The passageways 16 and 18 are connected to each other by means of a central circular opening 20, the upper edge of which represents the fixed sealing member 22 designed to co-operate with a movable closing member 24.

The lower surface 26 of the movable closing member 24 is in contact with the space 30 in connection with the passageways 16 towards the surrounding atmosphere and the upper surface 28 of the movable closing member 24 is in contact with the space 32 within the upper cap 14 which is in connection with the passageways 18 towards the inner space 19 of the tubular member 12.

The passageways 16 and the inner space 30 is closed off from the inner space 19 of the tubular member 12 by means of a closing wall 21, part of the valve housing 10.

According to the invention, the movable closing member 24 is designed in the shape of a circular poppet valve 40 provided with an inverted bowl shaped central part 42 the lower surface of which is in permanent contact with the atmospheric air pressure. One can easily understand that the bowl shaped lower surface of the poppet valve 40 provides an increased surface in contact with the atmospheric air pressure and that, consequently, the lifting power of the closing member 24 will be significantly improved in case of negative pressure within the sewage system.

Preferably, the bowl shaped central part 42 of the poppet valve 40 will be provided with a peripheral collar having an inverse angled conical surface 44, extending upwards towards an upper edge 45, under an angle α (Figure 2). Such angle could be between 20° and 45°, and preferably about 30°.

The lower surface of the bowl shaped central part 42 is in contact with the surrounding atmosphere and will provide for an excellent lifting force of the valve 40 in case of sudden negative air pressure at the upper surface of the valve 40.

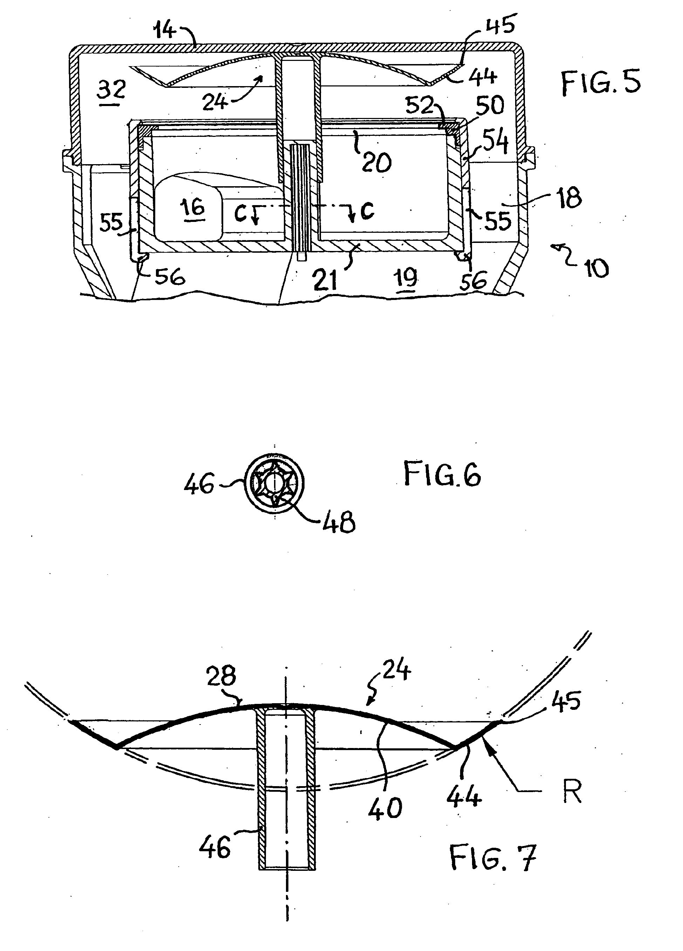

In order to still improve the lifting force of the circular poppet valve 40, the inverse angled conical surface 44 of the valve is slightly curved following a circle with a radius R. Said radius R equals about the diameter of the valve seat opening 20 (see figure 7).

Preferably, the horizontal level of the top of the bowl shaped central part 42 will be situated in a higher position than the level of the upper edge 45 of the inverse angled conical surface 44.

The lower surface of the bowl shaped inner part 42 is provided , in its centre, with a tubular extension 46, designed to co-operate as a guiding means with a stem 48 rigidly connected to the wall 21 of the valve housing 10. According to a preferred embodiment, the stem 48 is provided with a star shaped outer surface (as shown on the figure 6) so as to minimise the friction between the tubular extension 46 and the stem 48 and to avoid the poppet valve 40 to get stuck about the stem.

The poppet valve 40 can be manufactured in any suitable rigid plastic material such as polypropylene (PP) or ABS.

Also according to the present invention, the upper edge 22 of the central opening 20 is provided with a soft annular seat 50 having a thin annular cantilever platform or lip 52 extending towards the centre of the opening 20.

The soft annular seat 50 with cantilever lip 52 can be manufactured in any suitable rubber material such as nitril butadiene rubber (NBR) and is clamped to the valve seat 22 of the valve housing 10 by means of a rigid ring 54.

In view of firmly securing the soft annular seat 50 onto the upper edge 22 of the central opening 20, the rigid ring 54 may be provided with flexible fingers 55 extending downwards and provided, at their lower extremity, with a latch 56 designed to grip onto the lower surface of the closing wall 21 of the valve housing 10.

In a normal closed position (Fig. 1 and 2) the poppet valve 40 is resting freely with its inverse angled conical surface 44 against the cantilever lip 52 of the soft annular seat 50 providing a secure sealing surface in normal (balanced) air pressure conditions.

In case of sudden negative pressure inside the sewage system, and as shown in figures 3 and 4, the atmospheric air pressure will lift up the poppet valve 40 and atmospheric air will be instantaneously introduced into the sewage pipes. Upon equilibration of the air pressure within the sewage system, the poppet valve 40 will resume its closing position by gravity against the cantilever lip 52.

During the lifting up of the movable closing member 24, the inverse poppet valve 40 will be guided by means of the tubular extension 46 moving over the fixed stem 48 and dislodging will be prevented by abutment of the central upper portion 28 of the bowl shaped poppet valve 40 against the lower surface of the upper cap 14 of the valve housing 10.

In case of overpressure within the sewage system, the air contained in the inner space 19, the passageways 18 and the upper space 32 will push against the upper surface 28 of the poppet valve 40 causing the inverse angled conical surface 44 to press firmly against the cantilever lip 52 deforming it downwards while enlarging the sealing surface due to the inverse angled conical surface 44. In doing this, it becomes clear that, the greater the overpressure is, the greater the sealing surface will be providing increased sealing properties against overpressure in the sewage system.

From the above description of the invention, it becomes clear that major improvements have been achieved with respect to the existing state of the art closing and sealing elements within air admittance valves for use in sewage systems.

The main advantages of the present invention versus the known sealing means would be: the easy to manufacture shape and components of the closing and sealing elements while providing more effective lifting power of the poppet valve upon sudden negative air pressure within the sewage system and improved closing accuracy and sealing capacity of the air admittance valve in either balanced air conditions or any possible positive air pressure within the sewage system.

The purpose of the embodiments described herewith is only to illustrate the invention while still other variations are possible without falling out of the scope of the invention as expressed in the following claims.

### Legend of the reference numerals

- 10 :: air admittance valve housing
- 12 :: tubular member
- 14 :: upper cap of the housing
- 16 :: passageway towards surrounding atmosphere
- 18 :: passageway towards the inner space of sewage system
- 19 :: inner space of tubular member 12
- 20 :: central circular opening
- 21 :: closing wall of the housing 10
- 22 :: fixed sealing member
- 24 :: movable closing member
- 26 :: lower surface of the closing member
- 28 :: upper surface of the closing member
- 30 :: inner valve space connected with passageways 16
- 32 :: space within cap 14 connected with passageways 18
- 40 :: inverse poppet valve
- 42 :: lower part of poppet valve
- 44 :: inverse angled conical surface
- 45 :: upper edge
- 46 :: tubular extension
- 48 :: fixed vertical stem
- 50 :: annular soft seat
- 52 :: cantilever lip
- 54 :: rigid ring
- 55 :: fingers
- 56 :: latches

## Claims

1. An air admittance valve to be connected to a sanitary waste pipe system for admitting atmospheric air into the waste pipe system towards the valve sealing means in response to a sudden pressure reduction in the system in order to protect the water traps in the system and to prevent discharge of contaminated air from the system to the atmosphere, the valve consisting of a valve body or housing (10) having
- a vertical tubular member (12) adapted to be connected to the waste water pipe system and having an inner space (19),
- a cover or cap (14) at the upper end of the valve housing (10) and having an inner space (32);
- a valve opening (20) and a valve seat (22) at the periphery of the valve opening (20), situated in an inner space (30) between the tubular member (12) and the cover (14), an upper edge of the valve seat (22) is provided with a soft annular seat (50) having a thin annular cantilever platform or lip (52) extending towards the center of the seat opening (20), said valve seat (22) being adapted to co-operate with a rigid plastic movable closing member (24) of the valve;
- at least one passageway (16) from the inner space (30) between the tubular member (12) and the cover (14) towards the surrounding atmosphere, said passageway (16) and the inner space (30) between the tubular member (12) and the cover (14) being in contact with the lower surface of the movable closing member (24) so as to lift said closing member (24) upon a sudden loss of air pressure in the waste water pipe system allowing fresh air to enter into the system via the passageway (16) in order to balance the air pressure inside the sewage system;
- at least one passageway (18) from the inner space (32) within the cover or cap (14) towards the inner space (19) within the tubular member (12), said passageway (18) being in contact with the upper surface of the movable closing member (24),
the movable closing member (24) having the shape of a circular poppet valve (40) provided with a conical peripheral collar (44) having an inverse angled surface extending upwards under an angle α **characterised in that** the moveable closing member (24) is provided with an inverted bowl shaped inner part (42), the upper area (28) of which extends at an horizontal level which is higher than the level of the upper peripheral edge (45) of the inverse angled conical surface (44) and **in that** the lower surface of the inverted bowl shaped inner part (42) of the poppet valve (40) is in permanent contact with the atmospheric air pressure, its upper surface being in contact with the inner space pressure of the sewage system.

2. An air admittance valve, according to claim 1,
**characterised in that** the lower surface of the bowl shaped inner part (42) is provided in its centre with a tubular extension (46) designed to co-operate with a vertical stem (48), rigidly connected to a wall (21) part of the valve housing (10), for guiding purposes.

3. An air admittance valve, according to claim 2,
**characterised in that** the vertical stem (48) is provided with a star shaped outer surface (seen in cross section) in order to reduce friction between the tubular extension (46) of the poppet valve (40) and the outer surface of the vertical stem (48).

4. An air admittance valve, according to claim 1,
**characterised in that** the inverse angled conical surface (44) of the peripheral edge is extending upwards under an angle between 20° and 45°.

5. An air admittance valve, according to claim 1,
**characterised in that** the inverse angled cone surface (44) of the peripheral edge is extending upwards under an angle of about 30°.

6. An air admittance valve, according to claim 1,
**characterised in that** the inverse angled cone surface (44) of the peripheral edge is extending upwards following a curved circle with a radius (R).

7. An air admittance valve according to claim 6, **characterised in that** the radius (R) of the curved circle of the inverse angled cone surface (44) equals about the diameter of the valve seat opening (20).

8. An air admittance valve according to claim 1, **characterised in that** the soft annular seat (50) is clamped towards the upper edge of the valve seat (22) by means of a rigid ring (54) fixed onto the valve housing (10).

9. An air admittance valve, according to claim 9,
**characterised in that** the rigid ring (54) is clamped onto the lower side of the closing wall (21) of the valve housing (10) by means of a set of resilient latches (56) provided at the lower extremity of fingers (55), extending downwards from the ring (54).

10. An air admittance valve, according to claim 1,
**characterised in that** the **rigid plastic** material of the circular poppet valve (40) is polypropylene (PP) or acrilonitrile-butadiene-styrene (ABS).

11. An air admittance valve, according to claim 1, **characterised in that** the soft annular seat (50) is manufactured in a rubber material.

12. An air admittance valve, according to claim 1, **characterised in that** the soft annular seat (50) is manufactured in a material such as nitril butadiene rubber (NBR).

13. Method of functioning of an air admittance valve, according to the claims 1 to 12, connected to a sanitary waste pipe system comprising a movable rigid closing member (24) in the shape of a poppet valve (40) and a fixed valve seat (22) having a soft upper edge (50),
**characterised in that** the movable poppet valve (40) is:
- resting in normal position on the seat (22) during balanced air pressure conditions or positive air pressure within the sewage pipe system,
- lifted from the seat (22) in case of negative pressure in the sewage pipe system whereby the lifting force is improved by the shape of the inverted bowl shaped central part and its periphery with inverse angled conical surface (44) of the valve and that the upwards movement of the poppet valve (40) is limited due to the abutment of the central upper portion of the bowl shaped portion of the valve against the lower surface of the cover (14) of the valve housing (10);
- pressed downwards, in case of overpressure within the sewage system, onto the soft cantilever edge of the seat (50) so as to bend it down in order to increase the sealing surface between the movable poppet valve (40) and the fixed seat (50).

## Patentansprüche

1. Belüftungsventil zum Anschließen an ein sanitäres Entsorgungs-Rohrsystem zum Belüften des Entsorgungs-Rohrsystems mit atmosphärischer Luft in Richtung der Ventil-Dichtungsmittel als Reaktion auf eine plötzliche Druckreduktion in dem System, um die Wasserabscheider in dem System zu schützen und ein Austreten von kontaminierter Luft aus dem System in die Atmosphäre zu verhindern, wobei das Ventil aus einem Ventilkörper oder -gehäuse (10) besteht, welcher/welches aufweist:
- ein vertikales rohrförmiges Element (12), welches dazu eingerichtet ist, mit dem Wasserentsorgungs-Rohrsystem verbunden zu werden, und welches einen Innenraum (19) aufweist,
- eine Abdeckung oder Kappe (14) an dem oberen Ende des Ventilgehäuses (10), und welche einen Innenraum (32) aufweist;
- eine Ventilöffnung (20) und einen Ventilsitz (22) an der Außenseite der Ventilöffnung (20), angeordnet in einem Innenraum (30) zwischen dem rohrförmigen Element (12) und der Abdeckung (14), wobei ein oberer Rand des Ventilsitzes (22) mit einem weichen ringförmigen Sitz (50) bereitgestellt ist, welcher eine dünne ringförmige auskragende Plattform oder Lippe (22) aufweist, welche sich in Richtung der Mitte der Sitzöffnung (20) erstreckt, wobei der Ventilsitz (22) dazu eingerichtet ist, mit einem steifen, aus Plastik gefertigten, beweglichen Schließelement (24) des Ventils zusammenzuwirken;
- wenigstens einen Durchgang (16) von dem Innenraum (30) zwischen dem rohrförmigen Element (12) und der Abdeckung (14) in Richtung der umgebenden Atmosphäre, wobei der Durchgang (16) und der Innenraum (30) zwischen dem rohrförmigen Element (12) und der Abdeckung (14) in Kontakt mit der unteren Fläche des beweglichen Schließelements (24) stehen, so dass das Schließelement (24) auf einen plötzlichen Verlust von Luftdruck in dem Abwasser-Rohrsystem hin angehoben wird, was es frischer Luft erlaubt, in das System über den Durchgang (16) einzutreten, um den Luftdruck in dem Abwassersystem auszugleichen;
- wenigstens einen Durchgang (18) von dem Innenraum (32) innerhalb der Abdeckung oder Kappe (14) in Richtung des Innenraums (19) innerhalb des rohrförmigen Elements (12), wobei der Durchgang (18) in Kontakt mit der oberen Fläche des beweglichen Schließelements (24) steht,
wobei das bewegliche Schließelement (24) die Form eines kreisförmigen Tellerventils (40) aufweist, welches mit einem konischen peripheren Kragen (44) bereitgestellt ist, welcher eine invers angewinkelte Fläche aufweist, welche sich nach oben unter einem Winkel α erstreckt,
**dadurch gekennzeichnet, dass** das bewegliche Schließelement (24) mit einem invertiert schalenförmigen Innenteil (42) bereitgestellt ist, dessen oberer Bereich (18) sich auf einem horizontalen Niveau erstreckt, welches höher ist als das Niveau des oberen peripheren Rands (45) der invers angewinkelten konischen Fläche (44),
und dadurch, dass die untere Fläche des invertiert schalenförmigen Innenteils (42) des Tellerventils (40) in permanentem Kontakt mit dem atmosphärischen Luftdruck steht, wobei seine obere Fläche in Kontakt mit dem Innenraumdruck des Abwassersystems steht.

2. Belüftungsventil nach Anspruch 1, **dadurch gekennzeichnet, dass** die untere Fläche des schalenförmigen Innenteils (42) in seiner Mitte mit einer rohrförmigen Erweiterung (46) bereitgestellt ist, welche dazu ausgelegt ist, mit einem vertikalen Schaft (48) zusammenzuwirken, welcher zum Zweck einer Führung starr mit einem Wandteil (21) des Ventilgehäuses (10) verbunden ist.

3. Belüftungsventil nach Anspruch 2, **dadurch gekennzeichnet, dass** der vertikale Schaft (48) mit einer sternförmigen Außenfläche bereitgestellt ist (im Querschnitt betrachtet), um eine Reibung zwischen der rohrförmigen Erweiterung (46) des Tellerventils (40) und der Außenfläche des vertikalen Schafts (48) zu reduzieren.

4. Belüftungsventil nach Anspruch 1, **dadurch gekennzeichnet, dass** die invers angewinkelte konische Fläche (44) des peripheren Rands sich unter einem Winkel von zwischen 20° und 45° nach oben erstreckt.

5. Belüftungsventil nach Anspruch 1, **dadurch gekennzeichnet, dass** die invers angewinkelte konische Oberfläche (44) des peripheren Rands sich unter einem Winkel von etwa 30° nach oben erstreckt.

6. Belüftungsventil nach Anspruch 1, **dadurch gekennzeichnet, dass** die invers angewinkelte konische Fläche (44) des peripheren Rands sich einem gekrümmten Kreis mit einem Radius (R) folgend nach oben erstreckt.

7. Belüftungsventil nach Anspruch 6, **dadurch gekennzeichnet, dass** der Radius (R) des gekrümmten Kreises der invers angewinkelten konischen Fläche (44) in etwa gleich dem Durchmesser der Ventilsitz-Öffnung (20) ist.

8. Belüftungsventil nach Anspruch 1, **dadurch gekennzeichnet, dass** der weiche ringförmige Sitz (50) in Richtung der oberen Kante des Ventilsitzes (22) mittels eines steifen Rings (54) geklemmt ist, welcher an dem Ventilgehäuse (10) fixiert ist.

9. Belüftungsventil nach Anspruch 9, **dadurch gekennzeichnet, dass** der steife Ring (54) an die Unterseite der Schließwand (21) des Ventilgehäuses (10) mittels eines Satzes elastischer Riegel (56) geklemmt ist, welche an der unteren Extremität von Fingern (55) bereitgestellt sind, welche sich nach unten von dem Ring (54) erstrecken.

10. Belüftungsventil nach Anspruch 1, **dadurch gekennzeichnet, dass** das steife Plastikmaterial des kreisförmigen Tellerventils (40) Polypropylen (PP) oder Acrylnitril-Butadien-Styrol (ABS) ist.

11. Belüftungsventil nach Anspruch 1, **dadurch gekennzeichnet, dass** der weiche ringförmige Sitz (50) aus einem Gummimaterial hergestellt ist.

12. Belüftungsventil nach Anspruch 1, **dadurch gekennzeichnet, dass** der weiche ringförmige Sitz (50) aus einem Material wie Nitril-Butadien-Kautschuk (NBR) hergestellt ist.

13. Funktionsverfahren eines Belüftungsventils nach den Ansprüchen 1 bis 12, welches mit einem sanitären Entsorgungs-Rohrsystem verbunden ist, welches ein bewegliches steifes Schließelement (24) in der Form eines Tellerventils (40) und einen fixierten Ventilsitz (22) umfasst, welcher einen weichen oberen Rand (50) aufweist,
**dadurch gekennzeichnet, dass** das bewegliche Tellerventil (40):
- in normaler Position auf dem Sitz (22) ruht, während ausgeglichener Luftdruckverhältnisse oder einem positiven Luftdruck innerhalb des Abwasser-Rohrsystems,
- von dem Sitz (22) angehoben wird, im Fall eines negativen Drucks in dem Abwasser-Rohrsystem, wobei die Anhebekraft durch die Form des Mittelteils in Form einer invertierten Schale und seines Außenbereichs mit invers angewinkelter konischer Fläche (44) des Ventils verbessert wird, und dadurch, dass die Aufwärtsbewegung des Tellerventils (40) auf Grund des Anschlags des mittleren oberen Abschnitts des schalenförmigen Teils des Ventils gegen die untere Fläche der Abdeckung (14) des Ventilgehäuses (10) begrenzt wird;
- nach unten gepresst ist, im Fall eines Überdrucks innerhalb des Abwassersystems, auf den weichen auskragenden Rand des Sitzes (50), so dass es nach unten gebogen wird, um die Dichtungsfläche zwischen dem beweglichen Tellerventil (40) und dem fixierten Sitz (50) zu vergrößern.

## Revendications

1. Soupape d'admission d'air à connecter à un système de canalisation d'évacuation sanitaire pour laisser entrer de l'air atmosphérique dans le système de canalisation de décharge en direction des moyens d'étanchéité de soupape en réponse à une baisse soudaine de la pression dans le système dans le but de protéger les siphons dans le système et d'empêcher toute décharge d'air contaminé depuis le système dans l'atmosphère, la soupape consistant en un corps ou un boîtier (10) comprenant:
- un élément tubulaire vertical (12) apte à être connecté au système de canalisation d'eaux usées et présentant un espace intérieur (19),
- un couvercle ou une coiffe (14) à l'extrémité supérieure du boîtier de soupape (10) et présentant un espace intérieur (32);
- une ouverture de soupape (20) et un siège de soupape (22) à la périphérie de l'ouverture de soupape (20), située dans un espace intérieur (30) entre l'élément tubulaire (12) et le couvercle (14), un bord supérieur du siège de soupape (22) est pourvu d'un siège annulaire flexible (50) présentant une plate-forme ou une lèvre annulaire en porte à faux (52) qui s'étend en direction du centre de l'ouverture de siège (20), ledit siège de soupape (22) étant apte à coopérer avec un élément de fermeture mobile en plastique rigide (24) de la soupape;
- au moins un passage (16) s'étendant à partir de l'espace intérieur (30) entre l'élément tubulaire (12) et le couvercle (14) en direction de l'atmosphère environnante, ledit passage (16) et l'espace intérieur (30) entre l'élément tubulaire (12) et le couvercle (14) étant en contact avec la surface inférieure de l'élément de fermeture mobile (24) de manière à soulever ledit élément de fermeture (24) en cas de perte soudaine de pression d'air dans le système de canalisation d'eaux usées, permettant à de l'air frais de pénétrer dans le système par l'intermédiaire du passage (16) dans le but d'équilibrer la pression d'air à l'intérieur du système d'égout; et
- au moins un passage (18) s'étendant à partir de l'espace intérieur (32) à l'intérieur du couvercle ou de la coiffe (14) en direction de l'espace intérieur (19) à l'intérieur de l'élément tubulaire (12), ledit passage (18) étant en contact avec la surface supérieure de l'élément de fermeture mobile (24),
l'élément de fermeture mobile (24) ayant la forme d'une soupape à champignon circulaire (40) pourvue d'un collier périphérique conique (44) présentant une surface oblique inversée s'étendant vers le haut en formant un angle a,
**caractérisée en ce que** l'élément de fermeture mobile (24) est pourvu d'une partie intérieure en forme de bol inversé (42) dont la région supérieure (28) s'étend à un niveau horizontal qui est plus élevé que le niveau du bord périphérique supérieur (45) de la surface conique oblique inversée (44), et **en ce que** la surface inférieure de la partie intérieure en forme de bol inversé (42) de la soupape à champignon (40) se trouve en contact permanent avec la pression d'air atmosphérique, sa surface supérieure étant en contact avec la pression d'espace intérieur du système d'égout.

2. Soupape d'admission d'air selon la revendication 1, **caractérisée en ce que** la surface inférieure de la partie intérieure en forme de bol (42) est pourvue en son centre d'une extension tubulaire (46) qui est conçue de manière à coopérer avec une tige verticale (48), connectée de façon rigide à une partie de paroi (21) du boîtier de soupape (10), à des fins de guidage.

3. Soupape d'admission d'air selon la revendication 2, **caractérisée en ce que** la tige verticale (48) est pourvue d'une surface extérieure en forme d'étoile (vue en coupe transversale) destinée à réduire le frottement entre l'extension tubulaire (46) de la soupape à champignon (40) et la surface extérieure de la tige verticale (48).

4. Soupape d'admission d'air selon la revendication 1, **caractérisée en ce que** la surface conique oblique inversée (44) du bord périphérique s'étend vers le haut en formant un angle compris entre 20° et 45°.

5. Soupape d'admission d'air selon la revendication 1, **caractérisée en ce que** la surface conique oblique inversée (44) du bord périphérique s'étend vers le haut en formant un angle d'environ 30°.

6. Soupape d'admission d'air selon la revendication 1, **caractérisée en ce que** la surface conique oblique inversée (44) du bord périphérique s'étend vers le haut en suivant un cercle courbe présentant un rayon (R).

7. Soupape d'admission d'air selon la revendication 6, **caractérisée en ce que** le rayon (R) du cercle courbe de la surface conique oblique inversée (44) est approximativement égale au diamètre de l'ouverture de siège de soupape (20).

8. Soupape d'admission d'air selon la revendication 1, **caractérisée en ce que** le siège annulaire flexible (50) est serré en direction du bord supérieur du siège de soupape (22) au moyen d'un anneau rigide (54) qui est fixé sur le boîtier de soupape (10).

9. Soupape d'admission d'air selon la revendication 9, **caractérisée en ce que** l'anneau rigide (54) est serré sur le côté inférieur de la paroi de fermeture (21) du boîtier de soupape (10) au moyen d'un ensemble de verrous élastiques (56) prévus à l'extrémité inférieure de doigts (55) s'étendant vers le bas à partir de l'anneau (54).

10. Soupape d'admission d'air selon la revendication 1, **caractérisée en ce que** la matière plastique rigide de la soupape à champignon circulaire (40) est le polypropylène (PP) ou l'acrylonitrile-butadiène-styrène (ABS).

11. Soupape d'admission d'air selon la revendication 1, **caractérisée en ce que** le siège annulaire flexible (50) est fabriqué à partir d'une matière de caoutchouc.

12. Soupape d'admission d'air selon la revendication 1, **caractérisée en ce que** le siège annulaire flexible (50) est fabriqué dans une matière telle que le caoutchouc nitrile butadiène (NBR).

13. Procédé de fonctionnement d'une soupape d'admission d'air selon les revendications 1 à 12 connectée à un système de canalisation d'évacuation sanitaire comprenant un élément de fermeture rigide mobile (24) en forme de soupape à champignon (40) et un siège de soupape fixe (22) présentant un bord supérieur flexible (50), **caractérisé en ce que** la soupape à champignon mobile (40):
- se trouve dans une position normale sur le siège (22) pendant des conditions de pression d'air équilibrées ou une pression d'air positive à l'intérieur du système d'égout;
- est soulevée du siège (22) en cas de pression négative dans le système d'égout, où la force de soulèvement est renforcée par la forme de la partie centrale en forme de bol inversé et sa périphérie présentant une surface conique oblique inversée (44) de la soupape, et **en ce que** le déplacement vers le haut de la soupape à champignon (40) est limité parce que la partie supérieure centrale de la partie en forme de bol de la soupape bute contre la surface inférieure du couvercle (14) du boîtier de soupape (10); et
- est pressée vers le bas, en cas de surpression à l'intérieur du système d'égout, sur le bord flexible en porte à faux du siège (50) de manière à plier celui-ci vers le bas afin d'agrandir la surface d'étanchéité entre la soupape à champignon mobile (40) et le siège fixe (50).
